# EUROPÄISCHE PATENTSCHRIFT

(11) **EP 2 284 633 B1**
(45) Veröffentlichungstag und Bekanntmachung des Hinweises auf die Patenterteilung: **12.10.2011**
(21) Anmeldenummer: 09009428.5
(22) Anmeldetag: 21.07.2009
(51) Int. Cl.: G05B 23/02, B60R 16/02, G01M 17/00, G01R 31/00, G06F 9/445

(54) **Verfahren zum Zugriff auf in einem Fahrzeug angeordnete Steuerungsgeräte, Steuerungsprogramm und Kommunikationssteuerungsgerät**
Method for accessing control devices, control program and communication control device in a vehicle
Procédé d'accès à des appareils de commande agencés dans un véhicule, programme de commande et appareil de commande de communication

(43) Veröffentlichungstag der Anmeldung: 16.02.2011
(73) Patentinhaber: SIEMENS AKTIENGESELLSCHAFT, 80333 München (DE)
(72) Erfinder: Hieber, Detlev, 76189 Karlsruhe (DE)

(56) Entgegenhaltungen:
- DE-A1- 4 433 745
- DE-A1-102006 009 585
- US-A1- 2007 030 844

## Beschreibung

In modernen Kraftfahrzeugen sind zahlreiche Steuerungsgeräte angeordnet, auf die z.B. im Rahmen von Kontrollen während eines Fertigungsprozesses oder während Wartungs- oder Instandhaltungsarbeiten schreibend oder lesend zugegriffen wird. In zahlreichen Situationen, die sich während Fahrzeugherstellung oder -diagnose ergeben, können bei Verwendung mehrerer oder mehrkanaliger Fahrzeugkommunikationsschnittstellen grundsätzlich mehrere Steuerungsgerätezugriffe parallel erfolgen. Dabei sind durch ein Steuerungsgerät oder dessen Firmware oder durch eine Produktionsumgebung bedingte Reihenfolgeabhängigkeiten zwischen einzelnen Zugriffsvorgängen pro Steuerungsgerät sowie zwischen Steuerungsgeräten zu berücksichtigen. Darüber hinaus ist es vielfach nicht möglich, daß sämtliche Steuerungsgerätezugriffe über jede Fahrzeugkommunikationsschnittstelle oder Schnittstellenressource erfolgen können.

Reihenfolgeabhängigkeiten oder diese abbildende Ablaufsteuerungsmodelle sind Gegenstand häufiger Anpassungen. Außerdem ist eine Vorab-Planung von Steuerungsgerätezugriffen insbesondere angesichts einer während der Fahrzeugherstellung zu berücksichtigenden Ausstattungsvariantenvielfalt problematisch. In einem zu prüfenden Fahrzeug angeordnete Steuerungsgeräte sind nämlich vor Beginn einer Prüfung vielfach nicht bekannt und können erst im Rahmen der Prüfung ermittelt werden. Eine Vorab-Planung der Steuerungsgerätezugriffe für alle möglichen Permutationen von Ausstattungscharakteristiken wäre zudem äußerst ineffizient.

Entsprechend bisherigen Lösungen werden Steuerungagerätezugriffe für eine standardisierte Untermenge von in einem Fahrzeugprogramm verbauten Steuerungsgeräten manuell geplant. Dabei werden Gruppen von Stetterungsgeräten gebildet, zwischen denen eine Parallelisierung von Steuerungagerätezugriffen erfolgen kann. Außerhalb der Gruppen ist kein paralleler Steuerungsgerätezugriff für Steuerungsgeräte möglich, die hunterschiedlichen Gruppen zugeordnet sind. Damit lassen sich Steuerungsgerätezugriffe nur unvollständig und wenig ressourceneffizient planen.

In DE 44 33 745 A1 ist ein Verfahren zum Zugriff auf in einem Fahrzeug angeordnete Steuerungegerate über eine Fahrzeugkomminikationsschnittstelle beschrieben, bei dem eine zusammenstellung- möglicher Steuerungs- bzw. Überwachungsvorgange die Zugriff auf in Fahrzeuge angeordnete Steuerungsgeräte erfordern, ermittelt wird. Dabei wird ein Fahrzeug für einen Steuerungegerätezugritf anhand eines Identifikators identifiziert. Außerdem werden vom Steuerungsgerätezugriff umfaßte Steuerungs- bzw. Überwachungsvorgänge ermittelt. Des weiteren wird eine Kommunikationsverbindung über eine ausgewählte Fahrzeugkommunikationsschnittstelle hergestellt. Hierzu werden von der ausgewählten Fahrzsugkammunikationsschnittstelle umfaßte Kommunikationsmittel ermittelt.

Der vorliegenden Erfindung liegt die Aufgabe zugrunde, ein verfahren zum Zugriff auf in einem Fahrzeug angeordnete Steuerungsgeräte anzugeben, das eine optimierte Ausnutzung von Ressourcen einer Fahrzeugkommunikationeschnittstelle bei komplexen Steuerungegerätezugriffen ermöglicht, sowie eine geeignete Implementierung des Verfahrens anzugeben.

Diese Aufgabe wird erfinndungsgemäß durch ein verfahren mit den in Anspruch 1 angegebenen Merkmalen, durch ein Steusrungsprogramm mit den in Anspruch 10 angegebenen Merkmalen und durch ein Kommikationssteuerungsgerät mit den in Anspruch 11 angegebenen Merkmalen gelöst. Vorteilhafte Weiterbildungen der vorliegenden Erfindung sind im den abhängigen Ansprüchen angegeben.

Ein wesentlicher Aspekt des erfindungsgemäßen Verfahrene liegt darin, daß eine zusammenstellung möglicher Steuerungs- bzw. Überwachungsvorgange, die Zugriff auf in Fahrzeugen angeordnete Steuerungsgeräte erfordern, ermittelt und Beispielweise in einer einem Engineering-Tool zugeordneten Datenbank gespeichert ist. Für einen Steuerungsgerätezugrift wird zunächst ein zu prüfendes Fahrzeug anband eines Identifikators identifiziert. Außerdem werden vom Steuerungsgerätezugriff umfaßte Steuerungs- bzw. Überwachungsvorgänge ausgewählt. Des weiteren wird eine Kommunikationsverbindung über eine ausgewählte Fahrzeugkommunikationsschnittstelle hergestellt. Darüber hinaus werden von der ausgewählten Fahrzeugkommunikationsschnittstelle umfaßte Kommunikationsmittel ermittelt. Ferner werden vom Steuerungsgerätezugriff umfaßte unabhängige Steuerungs- bzw. Überwachungsvorgänge ermittelt, die verfügbaren Kommunikationsmitteln zugeordnet und nicht von einem übergeordneten Steuerungs- bzw. Oberwachungsvorgang des Steuerungsgerätezugriffs abhängig sind. Für jedes verfügbare Kommunikationsmittel wird aus den ermittelten unabhängigen Steuerungs- bzw. Oberwachungsvorgängen ein Steuerungs- bzw. Überwachungsvorgang zum Ablauf ausgewählt, der die meisten untergeordneten abhängigen Steuerungs- bzw. Überwachungsvorgänge aufweist, beispielsweise entlang eines Pfades innerhalb einer Baumstruktur. Abschließend wird ein Zugriff auf Kommunikationsmittel und Steuerungsgeräte eingeräumt, die dem zum Ablauf ausgewählten Steuerungs- bzw. Überwachungsvorgang zugeordnet sind.

Die vorliegende Erfindung bietet als Vorteil, daß eine durchgängige und ressourceneffiziente Planung von Steuerungsgerätezugriffen unter Berücksichtigung samtlicher Fahrzeugvarianten eines Fahrzeugprogramms ermöglicht wird. Des weiteren entfällt eine häufig fehleranfällige manuelle Schätzung von Laufzeiten einzelner Steuerungsgerätezugriffe zur Ermittlung einer zeit- bzw, ressourcenoptimierten Zugriffssequenz. Insgesamt kann also automatisiert eine optimierte Auslastung von Ressourcen einer Fahrzeugkommunikationsschnittstelle bei Steuerungs- und Überwachungsvorgängen während Fahrzeugherstellung oder -diagnose erzielt werden.

Wenn von den ermittelten unabhängigen Steuerungs- bzw. Überwachungsvorgangen eine gleicher Anzahl untergeordneter abhängiger Steuerungs- bzw, Überwachungsvorgänge aufweisen, wird entsprechend einer bevorzugen Ausgestaltung der vorliegenden Erfindung der Steuerungs- bzw. Überwachungsvorgang zum Ablauf ausgewählt wird, dem um Vergleich sine höhere Priorität zugeordnet, Dabei kann die Priorität implizit anhand einer Pfadlänge innerhalb einer Baumstruktur ermittelt werden. Auf diese Weise können Prioritäten von Steuerungs- bzw. Überwachungsvorgänge für eine optimierte Planung von Steuerungsgerätezugriffen berücksichtigt werden.

Ein zum Ablauf ausgewählter Steuerangs- bzw. Überwachungsvorgang wird erfingdungsgemäß nach seiner Abarbeitung aux einer Liste der vom Steuerungsgerätezugriff umfaßten Steuerungs- bzw. Überwachungsvorgange gestrichen. Anschließend kann eine erneute Auswahl des Steuerungs- bzw. Überwachungsvorgang zum Ablauf erfolgen, der die meisten untergeordneten abhängigen Steuerungs- bzw. Überwachungsvorgänge oder die höchste Priorität aufweist.

Die vorliegende Erfindung wird nachfolgend an einem Ausführungsibeispiel anhand der Zeichnung näher erläutert. Es zeigt
- Figur 1: eine Schematische Darstellung eines Fahrzeugdiagno- sesystems, in das erfindungegemäße Varfahren enge- wendet wird,
- Figur 2: eine Schematische Darstellung von hierarchisch ab- hängige Objekten zur Abbildung eines Ablaufzteue- rungemodells für ein Fahrzeugdiagnosesystem ent- sprechend Figur 1,
- Figur 3: ein Ablaufdiagram für ein Verfahren zum Zugriff auf in einem Fahrzeug angeordnete steuerungsgeräte.

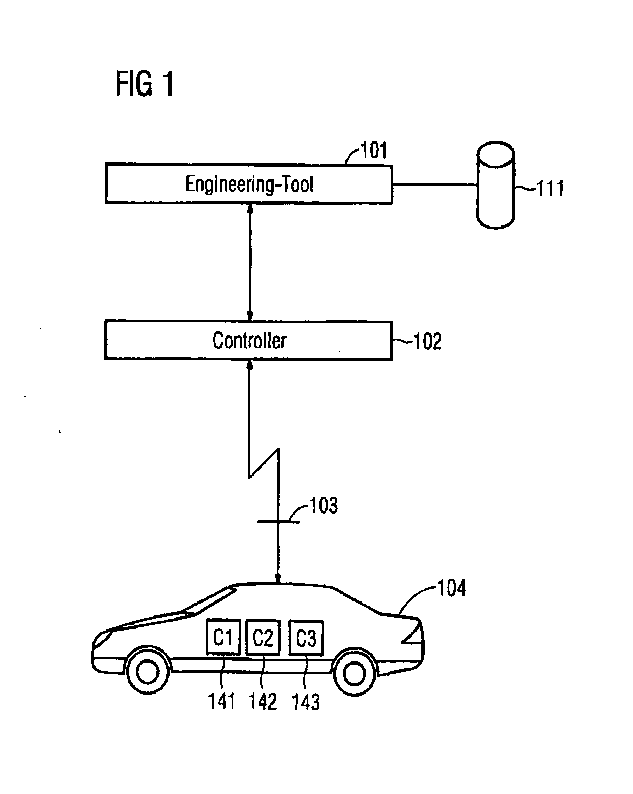

Das in Figur 1 dargestellte Fahrzeugdiagnosesystem umfaßt ein Engineering-Tool 101 zur Konfiguration des Fahrzeugdiagnosesystems, einen Controller 102 zum Auslesen und Schreiben von Steuerungsgeräteparametern und zumindest eine Fahrzeugkommunikationsschnittstelle 103 zum Zugriff auf in einem zu prüfenden oder einzustellendem Fahrzeug 104 angeordnete Steuerungsgeräte 141-143. Der Controller 102 kann beispielsweise ein mobiles Diagnosegerät oder eine Rechnereinheit sein, durch die ein Diagnose- oder Konfigurationsvorgang initiiert und gesteuert wird. Eine Kommunikationsverbindung zwischen dem Controller 103 und dem Fahrzeug 104 kann drahtgebunden oder über eine Funkschnittstelle erfolgen.

Mittels des Engineering-Tools 101 erfolgt für sämtliche Fahrzeugvarianten einer Modellpalette eines Herstellers eine vollständige Erfassung von Steuerungs- bzw. Überwachungsvorgängen, die für Diagnose- oder Konfigurationsvorgänge relevant sind. Des weiteren werden mittels des Engineering-Tools 101 Abhängigkeiten zwischen den ermittelten Steuerungs- bzw. Überwachungsvorgänäen erfaßt und in einer dem Engineering-Tool 101 zugeordneten Datenbank 111 gespeichert. Darüber hinaus werden mittels des Engineering-Tools 101 Zuordnungen der erfaßten Steuerungs- bzw. Überwachungsvorgänge zu vorgebbaren Ausstattungscharakteristiken und zu jeweils erforderlichen Kommunikationsressourcen ermittelt und in der Datenbank 111 gespeichert.

Sämtliche in der Datenbank 111 erfaßte Steuerungs- bzw. Überwachungsvorgänge, die Abhängigkeiten zwischen den Steuerungs- bzw. Überwachungsvorgängen und die Zuordnungen der Steuerungs- bzw. Überwachungsvorgänge werden mittels des Engineering-Tools 101 in einem Reihenfolgeabhängigkeiten berücksichtigenden Ablaufsteuerungsmodell abgebildet. Innerhalb des Ablaufsteuerungsmodells sind die Abhängigkeiten zwischen den Steuerungs- bzw. Überwachungsvorgängen zur vereinfachten Analyse in einem Graph abgebildet. Ferner sind zur Beschreibung von Ausstattungscharakteristiken Gültigkeitsregeln erstellt und im Ablaufsteuerungsmodell abgebildet. Die Gültigkeitsregeln werden bei einer Bearbeitung einer Steuerungsgerätezugriffsanforderung im Rahmen eines Diagnose- oder Konfigurationsvorgangs ausgewertet.

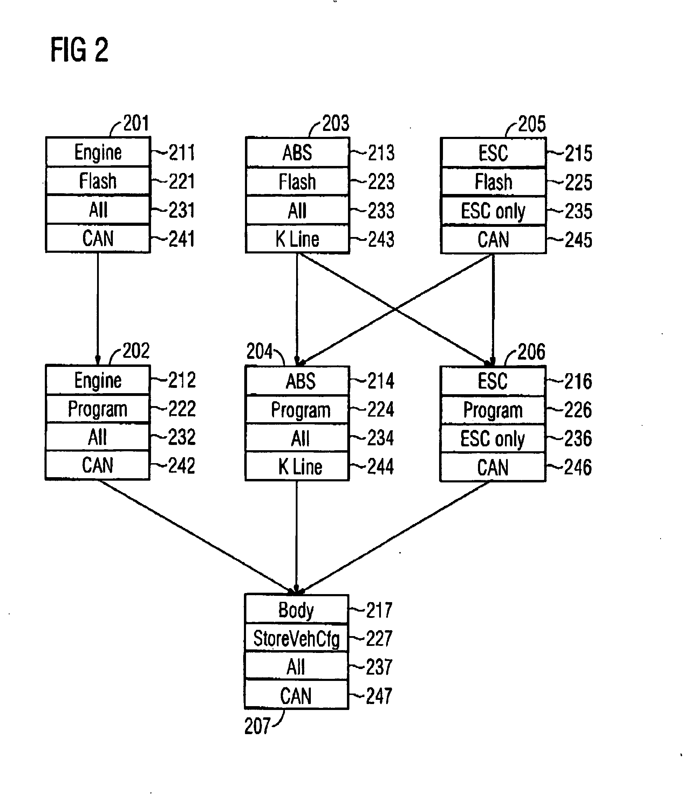

Die in Figur 2 beispielhaft dargestellten Objekte 201-207 des Ablaufsteuerungsmodells repräsentieren mögliche Steuerungs- bzw. Überwachungsvorgänge, die im Rahmen komplexer Diagnoseund Konfigurationsvorgänge hierarchische Anhängigkeiten aufweisen. Jedes der Objekte 201-207 umfaßt Angaben oder Zuordnungen zur jeweiligen Fahrzeugkomponente 211-217, zur Vorgangsart 221-227, zur gültigen Ausstattungscharakteristik 231-237 und zu erforderlichen Kommunikationsressourcen 241-247.

Im vorliegenden Beispiel weist der durch das Objekt 207 repräsentierte hierarchisch übergeordnete Vorgang "Body - StoreVehCfg" zum Speichern einer Fahrzeugkonfiguration Abhängigkeiten zu den Objekten 202, 204, 206 auf. Die Objekte 202, 204, 206 repräsentieren die Vorgänge "Engine - Program", "ABS - Program" und "ESC - Program" zum Programmieren der durch die Angaben 212, 214, 216 bezeichneten Fahrzeugkomponenten Motorsteuerung, Antiblockiersystem und Fahrdynamikregelung. Die Vorgänge "Engine - Program", "ABS - Program" und "ESC - Program" weisen wiederum Abhängigkeiten zu den durch die Objekte 201, 203, 205 repräsentierten hierarchisch untergeordneten Vorgängen "Engine - Flash", "ABS - Flash" und "ESC - Flash" zum Überschreiben von Firmware der durch die Angaben 211, 213, 215 bezeichneten Fahrzeugkomponenten auf. Dabei existieren auch kreuzweise Abhängigkeiten zwischen den Vorgängen "ABS - Program" und "ESC - Flash" einerseits und "ABS - Flash" und "ESC - Program" andererseits.

Die Objekte 201-204 sind entsprechend dem in Figur 2 dargestellten Beispiel aufgrund der Angaben 231-234, 237 "All" für alle Fahrzeugvarianten gültig, während die Objekte 205-206 aufgrund der Angaben 235-236 nur für Fahrzeuge mit Fahrdynamikregelung gültig sind. Darüber hinaus ist durch die Zuordnungen 241-242, 245-247 "CAN" gekennzeichnet, daß die Vorgänge "Engine - Flash", "Engine - Program", "ESC - Flash", "ESC - Program" und "Body - StoreVehCfg" einen CAN-Bus-Zugriff erfordern. Demgegenüber erfordern die Vorgänge "ABS - Flash", "ABS - Program" entsprechend den Zuordnungen 243-244 "K Line" einen Zugriff über eine K-Leitung.

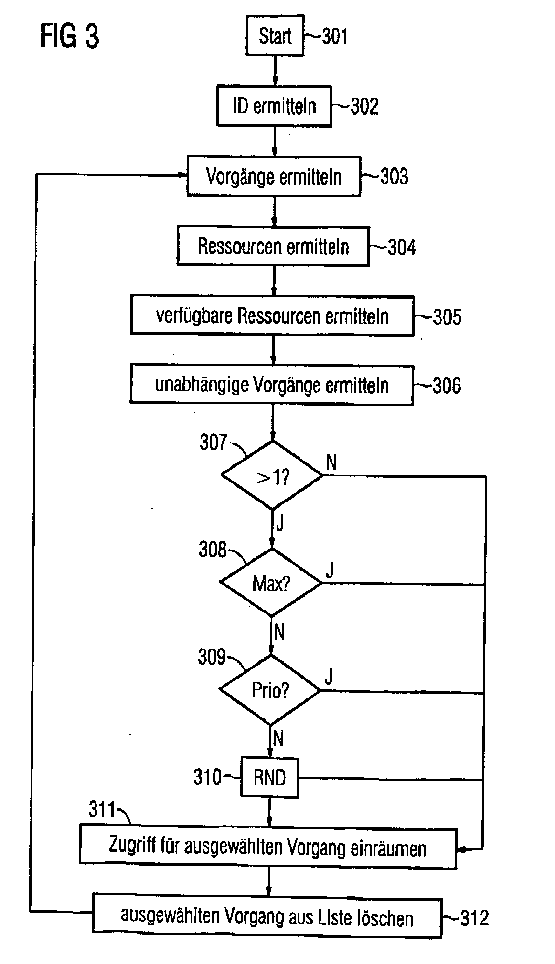

Entsprechend dem in Figur 3 dargestellten Ablaufdiagramm erfolgt nach einem Start eines Diagnose- oder Konfigurationsvorgangs (Schritt 301) zunächst eine Identifikation des prüfenden oder einzustellenden Fahrzeugs (Schritt 302). Beispielsweise wird hierzu eine Fahrgestellnummer ermittelt. Nachfolgend werden vom gestarteten Diagnose- oder Konfigurationsvorgang umfaßte Steuerungs- bzw. Überwachungsvorgänge ermittelt (Schritt 303), die einen Steuerungsgerätezugriff erfordern. Nach Herstellung einer Kommunikationsverbindung über zumindest eine ausgewählte Fahrzeugkommunikationsschnittstelle, wie CAN-Bus oder K-Leitung, werden von der ausgewählten Fahrzeugkommunikationsschnittstelle umfaßte Kommunikationsressourcen ermittelt (Schritt 304). Die Kommunikationsressourcen können beispielsweise durch die Fahrzeugkommunikationsschnittstelle bereitgestellte Kommunikationskanäle sein.

Nach einer Ermittlung verfügbarer Kommunikationsressourcen (Schritt 305) werden unabhängige Steuerungs- bzw. Überwachungsvorgänge ermittelt (Schritt 306), die
- verfügbaren Kommunikationsressourcen zugeordnet sind und
- nicht von einem übergeordneten Steuerungs- bzw. Überwachungsvorgang abhängig sind, der ebenfalls vom gestarteten Diagnose- oder Konfigurationsvorgang umfaßt ist.

Die unabhängigen Steuerungs- und Überwachungsvorgänge werden dabei parallel für alle verfügbaren Kommunikationsressourcen ermittelt, um eine optimale Auslastung parallel verfügbarer Kommunikationsressourcen zu erzielen.

Umfaßt ein gestarteter Diagnose- oder Konfigurationsvorgang beispielsweise die Vorgänge "Engine - Program", "ABS - Program", "ESC - Flash", "ESC - Program" und "Body - StoreVehCfg" entsprechend dem durch Figur 2 dargestellten Ablaufsteuerungsmodell, werden durch Schritt 306 "Engine - Program", "ABS - Program" und "ESC - Flash" als unabhängige Steuerungs- bzw. Überwachungsvorgänge ermittelt.

In Schritt 307 wird ermittelt, ob mehr als ein unabhängiger Steuerungs- bzw. Überwachungsvorgang vorliegt. Bei nur einem unabhängigen Steuerungs- bzw. Überwachungsvorgang wird dieser zum Ablauf ausgewählt und ein Zugriff auf Kommunikationsressourcen und Steuerungsgeräte eingeräumt wird, die dem zum Ablauf ausgewählten Steuerungs- bzw. Überwachungsvorgang zugeordnet sind (Schritt 311). Nach seiner Abarbeitung wird der zum Ablauf ausgewählte Steuerungs- bzw. Überwachungsvorgang aus einer Liste der vom Diagnose- oder Konfigurationsvorgang umfaßten Steuerungs- bzw. Überwachungsvorgänge gestrichen (Schritt 312). Anschließend erfolgt entsprechend Schritt 303 eine erneute Ermittlung verbleibender Steuerungs- bzw. Überwachungsvorgänge innerhalb des gestarteten Diagnose- oder Konfigurationsvorgangs. Nachfolgend wird ggf. aus den verbleibenden Steuerungs- bzw. Überwachungsvorgängen erneut der Steuerungs- bzw. Überwachungsvorgang zum Ablauf ausgewählt, der die meisten untergeordneten abhängigen Steuerungs- bzw. Überwachungsvorgänge entlang eines Pfades innerhalb einer Baumstruktur aufweist.

Werden entsprechend Schritt 307 mehrere unabhängige Steuerungs- bzw. Überwachungsvorgänge ermittelt, wird entsprechend den Schritt 308 aus den ermittelten unabhängigen Steuerungs- bzw. Überwachungsvorgängen der Steuerungs- bzw. Überwachungsvorgang zum Ablauf ausgewählt, der die meisten untergeordneten abhängigen Steuerungs- bzw. Überwachungsvorgänge entlang eines Pfades aufweist. Hierbei werden beispielsweise nur untergeordnete abhängige Steuerungs- bzw. Überwachungsvorgänge entlang eines Pfads in einem Graph berücksichtigt, durch den Abhängigkeiten zwischen den Steuerungs- bzw. Überwachungsvorgängen abgebildet sind.

Bei gleicher Anzahl untergeordneter abhängiger Steuerungs- bzw. Überwachungsvorgänge wird entsprechend Schritt 309 aus den ermittelten unabhängigen Steuerungs- bzw. Überwachungsvorgängen der Steuerungs- bzw. Überwachungsvorgang zum Ablauf ausgewählt wird, dem im Vergleich eine höhere Priorität zugeordnet ist. Die Priorität wird vorzugsweise implizit anhand o.g. Pfadlange innerhalb einer Baumstruktur ermittelt. Sollten entsprechend dem Vergleich in Schritt 309 mehrere Steuerungs- bzw. Überwachungsvorgänge die gleiche Priorität aufweisen, wird ein Steuerungs- bzw. Überwachungsvorgang per Zufallsprinzip ausgewählt (Schritt 310).

Das vorangehend beschriebene Verfahren wird bevorzugt durch ein Steuerungsprogramm implementiert, das in einen Arbeitsspeicher einer Rechnereinheit, beispielsweise des in Figur 1 dargestellten Controllers 102, ladbar ist. Das Steuerungsprogramm weist zumindest einen Codeabschnitt auf, bei dessen Ausführung die Schritte des beschriebenen Verfahrens durchgeführt werden, wenn das Steuerungsprogramm in der Rechnereinheit abläuft.

## Patentansprüche

1. Verfahren zum Zugriff auf in einem Fahrzeug angeordnete Steuerungsgeräte über zumindest eine Fahrzeugkommuniations-Schnittstelle, bei dem
- eine Zusammenstellung möglicher Steuerungs- und/oder Überwachvngsvargänge, die Zugriff auf in Fahrzeugen angeordnete Steuerungegeräte erfordern, ermittelt ist,
- ein Fahrzeug für einen Steuerungsgerätezugriff anhand eines Identifikators identifiziert wird,
- vom Steuerungsgerätezugfiff umfaßte Steuerungs- und/oder Überwachungsvorgang ermittelt werden,
- eine Kommunikationsverbindung über eine ausgewählte Fahrzeugkommunikationsschnittstelle hergestellt wird,
- von der ausgawählten Fahrzeugkommunikationsschnittstelle umfaßte Kommunikationsmittel ermittelt werden,
**dadurch** gekennzeichet, daß
- vom Steuerungsgerätezugriff umfaßte unabhängige Steuerungs- und/oder Überwachungsvorgange ermittelt werden, die verfügbaren Kommunikationsmitteln zugeordnet und nicht von einem übergeordneten Steuerungs- and/oder Überwachungsvorgang des Steuerungsgerätezugriffs abhängen,
- für jedes Verfügbare Kommunikationsmittel aus den ermittelten unabhängigen Steuerungs- und/oder Überwachungsvorgängen ein Steuerungs- und/oder Überwachungsvorgang zum Ablauf ausgewählt wird, der die meisten untergeordneten abhängigen Steuerungs- und/oder Überwachungsvorgange aufweist,
- ein zugriff auf kommunikationsmittel und Steuerungsgeräte eingeräumt wird, die dem zum Ablauf ausgewählten Steuerungs- und/oder Überwachungsvorgang zugeordnet sind,
- ein zum Ablauf ausgewählter Steuerungs- und/oder Überwachungsvorgang nach seiner Abarbeitung aus einer Liste der vom Steuerungagerätezugriff umfaßten Steuerungs- und/oder Überwachungsvorgange bestrichen wird und anschließend eine erneute Auswahl des Steuerungs- und/oder Überwachungsvorgang zum Ablauf erfolgt, der die meisten untergeordneten abhängige Steuerungs- und/oder Überwachungsvorgänge aufweist.

2. Verfahren nach Anspruch 1,
aus den ermittelten unabhängigen Steuerungs- und/oder Überwachungsvorgängen der Steuerungs- und/oder Überwachungsvorgang zum Ablauf ausgewählt wird, der die meisten untergeordneten abhängigen Steuerungs- und/oder Überwachungsvorgänge entlang eines Pfades innerhalb einer Baumstruktur aufweist,

3. Verfahren nach einem der Ansprüche 1 oder 2,
bei dem die Zusammenstellung möglicher steuerungs- und/oder Überwachungsvorgränge mittels eines Engineering-Tools erfolgt, und bei dem mittels des Engineering-Toole Abhängigkeiten zwischen den ermittelten Steuerungs- und/oder Überwachungsvorgängen ermittelt werden, und bei dem mittels des Engineering-Tools Zuordnungen der ermittelten Steuerungs- und/oder Überwachungsvorgänge zu vorgebbaren Ausstattungscharakteristiken und/oder zu jeweils erforderlichen Kommunikationsmitteln ermittellt werden.

4. Verfahren nach Anspruch 3,
bei dem die Zusammenstellung möglicher Steuerungs- und/oder Überwachungsvorgänge, die Abhängigkeiten zwischen den Steuerungs- und/oder Überwachungsvorgängen und die Zuordnungen der Steuerungs- und/oder Überwachungsvorgänge in einem Reihenfolgeabhängigkeiten berücksichtigenden Ablaufsteuerungamodell abgebildet sind.

5. Verfahren nach einem der Ansprüche 3 oder 4,
bei dem die Abhängigkeiten zwischen den Steuerungs- und/oder Überwachungsvorgängan in einem Graph abgebildet sind.

6. Verwahren nach einem der Ansprüche 1 bis 5,
bei dem zur Beschreibung von Ausstattungscharakteristiken Gültigkeiteregeln erstellt sind, die bei einer Bearbeitung einer steuemmgsgerätezugriffsanforderung ausgewertet werden.

7. Verfahren nach einem der Ansprüche 1 bis 6,
bei dem die Kommunikationsverbindung über die ausgewählte Fahrzeugkommunikationeschnittstelle zwischen einer- Steuerungs- und/oder Überwachungseinheit und im Fahrzeug angeordneten Steuerungsgeräten hergestellt wird.

8. Verfahren nach einem der Ansprüche 1 bis 7,
bei dem aus den ermittelten unabhängigen Steuerungs- und/oder Überwachungavorgängen bei gleicher Anzahl untergeordneter abhängiger Steuerungs- und/oder Überwachungsvorgänge der Steuerungs- und/oder Überwachungsvorgang- zum Ablauf ausgewählt wird, dem eine höhere Priorität zugeordnet ist.

9. Kommunikationssteuerungsgerät mit Mitteln
- zur Ermittlung einer Zusammenstellung möglicher Steuerungs- und/oder Überwachungsvorgänge, die Zugriff auf in Fahrzeugen angeordnete Steuerungsgeräte erfordern,
- zur veranlassung einer Identifizierung eines Fahrzeugs anhand eines Identifikators,
- zur Ermittlung vom einem Steuerungsgerätezugriff umfaßter Steuerungs- und/oder Überwachungsvorgänge,
- zur Veranlassung einer Herstellung einer Kommunikationsverbindung über eine ausgewählten Fahrzeugkommunikationsschnittstelle,
- zur Vermittlung von Kommunikationsmitteln, die von der ausgewählten Fahrzeugkommunikationsschnittstelle umfaßt sind,
- zur Ermittlung von unabhängigen Steuerungen und/oder Überwachungsvorgängen, die vom Steuerungegerätezugriff umfaßt sind, verfügbaren Kommunikationsmitteln zugeordnet sind und nicht von einem Übergeordneten Steuerungs-und/oder Überwachungsvorgang des Steuerungsgerätezugriffs abhängen,
- zur Auswahl eines Steuerung- und/oder Überwachungsvorganzs aus den ermittelten unabhängigen Steuerungs-und/oder Überwachungsvorgängen, der die meisten untergeordneten abhängigen Steuerungs- und/oder Überwachungsvorgänge aufweist,
- zur Veranlassung einer Einräumung eines Zugriff auf Kommunikationsmittel und Steuerungsgeräte, die dem ausgewählen Steuerungs- und/oder Überwachungsvorgang zugeordnet sind,
- zur Streichung eines zum Ablauf ausgewählten Steuerungs-und/oder Überwachungsvorgangs nach seiner Abarbeitung aus einer Liste der vom steuerungsgerätezugriff umfaßten Steuerungs- und/oder Überwachungsvorgänge und zur anschließenden erneuten auswahl des Steuerings- und/oder Überwachungsvorgang zum Ablauf, der die meisten untergeordneten abhängigen Steuerungs- und/oder Überwachungsvorgänge aufweist.

10. Steuerungsprogramm, das Anweisungen umfasst, die das Kommunikationssteuergerät nach Patentanspruch 9. zur Ausführung der Schritte des Verfahrens nach Patentanspruch 1 veranlassen, wenn diese Anweisungen von einem Prozessor des Kommunikationssteuergerätes ausgeführt werden.

## Claims

1. Method for accessing control units arranged in a vehicle using at least one vehicle communication interface, in which
- a combination of possible control and/or monitoring operations which require access to control units arranged in vehicles is ascertained,
- a vehicle is identified for control unit access using an identifier,
- control and/or monitoring operations covered by the control unit access are ascertained,
- a communication link is set up via a selected vehicle communication interface,
- communication means covered by the selected vehicle communication interface are ascertained,
**characterized in that**
- independent control and/or monitoring operations covered by the control unit access are ascertained which are associated with available communication means and are not dependent on a superordinate control and/or monitoring operation of the control unit access,
- for each available communication means, a control and/or monitoring operation which has the greatest number of subordinate dependent control and/or monitoring operations is selected for execution from the ascertained independent control and/or monitoring operations,
- access to communication means and control units which are associated with the control and/or monitoring operation selected for execution is granted,
- a control and/or monitoring operation selected for execution is deleted from a list of the control and/or monitoring operations covered by the control unit access when it has been executed, and the control and/or monitoring operation which has the greatest number of subordinate dependent control and/or monitoring operations is then reselected for execution.

2. Method according to Claim 1,
in which the control and/or monitoring operation which has the greatest number of subordinate dependent control and/or monitoring operations along a path within a tree structure is selected for execution from the ascertained independent control and/or monitoring operations.

3. Method according to one of Claims 1 and 2,
in which possible control and/or monitoring operations are combined by means of an engineering tool, and in which the engineering tool is used to ascertain dependencies between the ascertained control and/or monitoring operations, and in which the engineering tool is used to ascertain associations between the ascertained control and/or monitoring operations and prescribable equipment characteristics and/or respective required communication means.

4. Method according to Claim 3,
in which the combination of possible control and/or monitoring operations, the dependencies between the control and/or monitoring operations and the associations of the control and/or monitoring operations are mapped in a flow control model which takes account of order dependencies.

5. Method according to one of Claims 3 and 4,
in which the dependencies between the control and/or monitoring operations are mapped in a graph.

6. Method according to one of Claims 1 to 5,
in which validity rules which are evaluated when a control unit access request is processed are created for the purpose of describing equipment characteristics.

7. Method according to one of Claims 1 to 6,
in which the communication link via the selected vehicle communication interface is set up between a control and/or monitoring unit and control units arranged in the vehicle.

8. Method according to one of Claims 1 to 7,
in which the control and/or monitoring operation which has a higher associated priority is selected for execution from the ascertained independent control and/or monitoring operations if the number of subordinate dependent control and/or monitoring operations is the same.

9. Communication control unit having means
- for ascertaining a combination of possible control and/or monitoring operations which require access to control units arranged in vehicles,
- for prompting identification of a vehicle using an identifier,
- for ascertaining control and/or monitoring operations covered by a control unit access operation,
- for prompting setup of a communication link via a selected vehicle communication interface,
- for ascertaining communication means which are covered by the selected vehicle communication interface,
- for ascertaining independent control and/or monitoring operations which are covered by the control unit access, are associated with available communication means and are not dependent on a superordinate control and/or monitoring operation of the control unit access,
- for selecting a control and/or monitoring operation from the ascertained independent control and/or monitoring operations which has the greatest number of subordinate dependent control and/or monitoring operations,
- for prompting grant of access to communication means and control units which are associated with the selected control and/or monitoring operation,
- for deleting a control and/or monitoring operation selected for execution from a list of the control and/or monitoring operations covered by the control unit access when it has been executed, and for subsequently reselecting for execution the control and/or monitoring operation which has the greatest number of subordinate dependent control and/or monitoring operations.

10. Control program which comprises instructions which prompt the communication control unit according to Patent Claim 9 to perform the steps of the method according to Patent Claim 1 when these instructions are performed by a processor in the communication control unit.

## Revendications

1. Procédé pour accéder par au moins une interface de communication de véhicule à un appareil de commande monté dans un véhicule, dans lequel
- on détermine un regroupement de processus de commande et/ou de contrôle éventuels, qui exigent un accès à des appareils de commande montés dans des véhicules,
- on identifie un véhicule pour un accès à des appareils de commande au moyen d'un identificateur,
- on détermine des processus de commande et/ou de contrôle compris dans l'accès aux appareils de commande,
- on ménage une liaison de communication par une interface de communication de véhicule sélectionnée,
on détermine des moyens de communication compris dans l'interface de communication de véhicule sélectionnée, **caractérisé en ce que**
- on détermine des processus de commande et/ou de contrôle indépendants qui sont compris dans l'accès aux appareils de commande, qui sont associés à des moyens de communication disponibles et qui ne dépendent pas d'un processus supérieur hiérarchiquement de commande et/ou de contrôle de l'accès aux appareils de commande,
- pour chaque moyen de communication disponible on sélectionne, dans les processus de commande et/ou de contrôle indépendants déterminés, un processus de commande et/ou de contrôle pour qu'il se déroule, processus qui comporte la plupart des processus dépendants de commande et/ou de contrôle qui sont subordonnés,
- on concède un accès aux moyens de communication et aux appareils de commande, qui sont associés au processus de commande et/ou de contrôle sélectionné pour qu'il se déroule,
- on raye un processus de commande et/ou de contrôle sélectionné pour qu'il se déroule, après qu'il a été achevé, d'une liste des processus de commande et/ou de contrôle compris dans l'accès aux appareils de commande et on effectue ensuite une sélection renouvelée du processus de commande et/ou de contrôle qui a la plupart des processus de commande et/ou de contrôle dépendants qui sont subordonnés.

2. Procédé suivant la revendication 1,
dans lequel on sélectionne, dans les processus de commande et/ou de contrôle indépendants qui sont déterminés, le processus de commande et/ou de contrôle pour qu' il se déroule qui a, le long d' un chemin dans une structure arborescente, la plupart des processus de commande et/ou de contrôle dépendants qui sont subordonnés.

3. Procédé suivant l'une des revendications 1 ou 2,
dans lequel on effectue le regroupement de processus éventuels de commande et/ou de contrôle au moyen d' un engineering tool et dans lequel au moyen de l'engineering tool on détermine des dépendances entre les processus de commande et/ou de contrôle déterminés et dans lequel au moyen de l' engineering tool on détermine des associations des processus de commande et/ou de contrôle déterminés à des caractéristiques d'équipement pouvant être prescrites et/ou à des moyens de communication nécessaires respectivement.

4. Procédé suivant la revendication 3,
dans lequel on reproduit le regroupement de processus éventuels de commande et/ou de contrôle, les dépendances entre les processus de commande et/ou de contrôle et les associations des processus de commande et/ou de contrôle dans un modèle de commande destiné à se dérouler, à prendre en compte et en fonction d' un ordre.

5. Procédé suivant l'une des revendications 3 ou 4,
dans lequel on reproduit dans un graphe les dépendances entre les processus de commande et/ou de contrôle.

6. Procédé suivant l'une des revendications 1 à 5,
dans lequel, pour la description de caractéristiques d'équipement, on établit des règles de validité qui sont évaluées lors d' une mise en oeuvre d' une demande d'accès à des appareils de commande.

7. Procédé suivant l'une des revendications 1 à 6,
dans lequel on ménage la liaison de communication par l'interface de communication de véhicule sélectionnée entre une unité de commande et/ou de contrôle et des appareils de commande montés dans le véhicule.

8. Procédé suivant l'une des revendications 1 à 7,
dans lequel on sélectionne, dans les processus indépendants de commande et/ou de contrôle qui sont déterminés pour un même nombre de processus de commande et/ou de contrôle dépendants qui sont subordonnés, le processus de commande et/ou de contrôle qui doit se dérouler et auquel est associée une priorité plus grande.

9. Appareil de commande de communication, comprenant des moyens
- de détermination d'un regroupement de processus éventuels de commande et/ou de contrôle, qui exigent un accès à des appareils de commande montés dans des véhicules,
- pour provoquer une identification d'un véhicule au moyen d'un indicateur,
- pour la détermination de processus de commande et/ou de contrôle compris dans l'accès aux appareils de commande,
- pour provoquer un établissement d'une liaison de communication par l'intermédiaire d'une interface sélectionnée de communication de véhicule,
- de détermination de moyens de communication qui sont compris dans l'interface sélectionnée de communication de véhicule,
- de détermination de processus indépendants de commande et/ou de contrôle, qui sont compris dans l'accès à des appareils de commande, qui sont associés à des moyens de communication disponibles et qui ne dépendent pas d'un processus de commande et/ou de contrôle supérieur hiérarchiquement de l'accès à des appareils de commande,
- de sélection dans les processus indépendants de commande et/ou de contrôle qui sont déterminés, d'un processus de commande et/ou de contrôle, qui a la plupart des processus de commande et/ou de contrôle dépendants qui sont subordonnés,
- pour provoquer une concession d'un accès à des moyens de communication et à des appareils de commande, qui sont associés au processus sélectionné de commande et/ou de contrôle,
- pour rayer un processus de commande et/ou de contrôle sélectionné pour qu'il se déroule, après son exécution, d'une liste des processus de commande et/ou de contrôle compris dans l'accès aux appareils de commande et pour sélectionner à nouveau ensuite pour qu'il se déroule le processus de commande et/ou de contrôle, qui a la plupart des processus de commande et/ou de contrôle dépendants qui sont subordonnés.

10. Programme de commande qui comprend des instructions qui font que l'appareil de commande de communication suivant la revendication 9 exécute les stades du procédé suivant la revendication 1, lorsque ces instructions sont réalisées par un processeur de l'appareil de commande de communication.
